# EUROPEAN PATENT SPECIFICATION

(11) **EP 2 619 474 B1**
(45) Date of publication and mention of the grant of the patent: **19.02.2020**
(21) Application number: 11827345.7
(22) Date of filing: 20.09.2011
(51) Int. Cl.: F16D 65/095, F16D 65/092, F16D 65/09

(54) **ANCHOR BRACKET FOR USE IN A DISC BRAKE ASSEMBLY AND METHOD FOR MAKING THE SAME**
VERANKERUNGSKLAMMER ZUR VERWENDUNG IN EINER SCHEIBENBREMSENBAUGRUPPE UND HERSTELLUNGSVERFAHREN DAFÜR
FERRURE D'ANCRAGE DESTINÉE À ÊTRE UTILISÉE DANS UN ENSEMBLE FREIN À DISQUE ET PROCÉDÉ DE FABRICATION DE CETTE FERRURE

(30) Priority: 21.09.2010 US 887265
(43) Date of publication of application: 31.07.2013
(73) Proprietor: ZF Active Safety US Inc., Livonia, MI 48150 (US)
(72) Inventor: ANDREWS, Kelly, Canton, MI 48188 (US); WEMPLE, Jon, Royal Oak, MI 48073 (US); DI PONIO, Victor, Novi, MI 48375 (US)
(74) Representative: Schmidt, Steffen J.
(86) International application number: PCT/US2011/052335
(87) International publication number: WO 2012/040190

(56) References cited:
- DE-A1- 4 318 749
- DE-A1-102004 002 571
- JP-A- H02 107 835
- KR-A- 20070 072 699
- US-A1- 2002 043 435
- US-A1- 2006 054 425
- US-B1- 6 223 866
- US-B1- 6 345 701
- US-B1- 6 505 716

## Description

### BACKGROUND OF THE INVENTION

This invention relates in general to vehicle disc brake assemblies and in particular to an improved anchor bracket adapted for use in such a vehicle disc brake assembly and method for making the same.

Most vehicles are equipped with a brake system for slowing or stopping movement of the vehicle in a controlled manner. A typical brake system for an automobile or light truck includes a disc brake assembly for each of the front wheels and either a drum brake assembly or a disc brake assembly for each of the rear wheels. The brake assemblies are actuated by hydraulic or pneumatic pressure generated when an operator of the vehicle depresses a brake pedal. The structures of these drum brake assemblies and disc brake assemblies, as well as the actuators therefore, are well known in the art.

A typical disc brake assembly includes a rotor which is secured to the wheel of the vehicle for rotation therewith. The disc brake assembly further includes a caliper assembly which is slidably supported on pins secured to an anchor bracket. The anchor bracket is secured to a non-rotatable component of the vehicle, such as the axle flange or steering knuckle, connected to the vehicle frame. The caliper assembly includes a pair of brake shoes which are disposed on opposed axial sides of the rotor. The brake shoes are connected to one or more hydraulically or pneumatically actuated pistons for movement between a non-braking position, wherein they are spaced apart from opposed axial sides or braking surfaces of the rotor, and a braking position, wherein they are moved into frictional engagement with the opposed braking surfaces of the rotor. When the operator of the vehicle depresses the brake pedal, the piston urges the brake shoes from the non-braking position to the braking position so as to frictionally engage the opposed braking surfaces of the rotor and thereby slow or stop the rotation of the associated wheel of the vehicle.

Typically, the anchor bracket includes a pair of arms interconnected by an inner tie. In some instances, the anchor bracket may also include an outer tie that also connects the arms. The anchor bracket includes two pairs of apertures. One of the pairs of apertures is adapted to receive bolts for securing the anchor bracket to the non-rotatable component of the vehicle. The other pair of apertures is adapted to receive bolts or pins for slidably supporting the caliper relative to the anchor bracket. The arms of the anchor bracket have guide rails formed thereon. The guide rails are adapted to support a pair of friction pad assemblies for sliding movement. The friction pad assemblies include the brake shoes. During braking, the anchor bracket functions to transmit the braking torque through the associated vehicle component to the vehicle frame.
US 2006/054425 A1 discloses a floating caliper type disc brake in which a support member comprises members of simple shapes so that an operation for machining the support member can be easily carried out. In particular, the support member is specified to be a two-piece member including an inner-side mounting member and a torque receiving member that are connected by bolts. Thereby, an operation of machining surfaces of the inner-side mounting member and the torque receiving member can be easily carried out.
US 6223866 B1 discloses a damped pad spring between the the friction pads and the anchor bracket. The damped pad spring is specified to include a damping material arranged between the anchor bracket and the pad spring. Thereby, friction pad noises can be reduced.

### SUMMARY OF THE INVENTION

This invention relates to a method for producing an anchor bracket adapted for use in a disc brake assembly. A method of for producing an anchor bracket according to the present invention is defined in claim 1. The method may comprise providing an as cast anchor bracket having two extending arms. Each of the arms includes an inboard end and an outboard end connect by a bridge portion. Each of the inboard ends defines an inboard channel and each of the outboard ends defines an outboard channel. Each of the bridge portions includes a guide pin hole. The inboard ends, outboard ends, and bridge portions define a rotor channel adapted to accommodate a rotor. One of the inboard ends and outboard ends includes a mounting opening adapted to receive a retainer to secure the anchor bracket relative to a vehicle component. At least one of the inboard ends and the outboard ends of the arms are interconnected by a tie bar. The method further comprises machining for brake shoe assembly clearances only the faces of the inboard channel and the faces of the outboard channel of the cast anchor bracket. The method further comprises machining for rotor clearance only a portion of the inboard arm facing the rotor channel, a portion of the outboard arm facing the rotor channel, and not a portion of an underside the bridge facing the rotor channel.

This invention also relates to a method for producing a disc brake assembly. A method for producing a disc brake assembly according to the present invention is defined in claim 4. The method may comprise providing an as cast anchor bracket having two extending arms. Each of the arms includes an inboard end and an outboard end connect by a bridge portion. Each of the inboard ends defines an inboard channel and each of the outboard ends defines an outboard channel. Each of the bridge portions includes a guide pin hole. The inboard ends, outboard ends, and bridge portions define a rotor channel adapted to accommodate a rotor. One of the inboard ends and outboard ends includes a mounting opening adapted to receive a retainer to secure the anchor bracket relative to a vehicle component. At least one of the inboard ends and the outboard ends of the arms are interconnected by a tie bar. The method further includes machining for brake shoe assembly clearances only the faces of the inboard channel and the faces of the outboard channel of the cast anchor bracket. The method further includes machining for rotor clearance only a portion of the two arms facing the rotor channel and not a portion of an underside of the bridge facing the rotor channel. The method further includes installing a clip in the inboard channel of each arm and the outboard channel of each arm. The method further includes providing an inboard brake shoe assembly and an outboard brake shoe assembly and installing the inboard brake shoe assembly and the outboard brake shoe assembly such that the inboard brake shoe assembly and the outboard brake shoe assembly are supported for sliding movement relative to the clips. The method further includes installing a caliper assembly for slidable movement relative to the anchor bracket.

This invention also relates to an anchor bracket adapted for use in a disc brake assembly, the disc brake assembly including four clips fixedly attached to the anchor bracket for supporting a pair of brake show assemblies. An anchor bracket according to the present invention is defined in claim 10. The anchor bracket may comprise a cast anchor bracket having two extending arms, each of the arms including an inboard end and an outboard end connect by a bridge portion. Each of the inboard ends defines an inboard channel and each of the outboard ends defines an outboard channel. Each of the bridge portions includes a guide pin hole. The inboard end, outboard end, and bridge portions define a rotor channel adapted to accommodate a rotor. One of the inboard ends and outboard ends includes a mounting opening adapted to receive a retainer to secure the anchor bracket relative to a vehicle component. At least one of the inboard ends and the outboard ends of the arms are interconnected by a tie bar. Only the faces of the inboard channel and the faces of the outboard channel of the cast anchor bracket are machined for brake shoe assembly clearance. Also, only portions of the arms facing the rotor channel and no portions of an underside of the bridge facing the rotor channel are machined for rotor clearance.

Other advantages of this invention will become apparent to those skilled in the art from the following detailed description of the disclosed embodiment, when read in light of the accompanying drawings.

### BRIEF DESCRIPTION OF THE DRAWINGS

Fig. 1 is a perspective view of a portion of a prior art vehicle disc brake assembly.
Fig. 2 is an exploded view of a portion of the prior art disc brake assembly of Fig. 1.
Fig. 3 is a cross sectional view of a portion of the prior art disc brake assembly of Fig. 1.
Fig. 4 is an exploded perspective view of an embodiment of a portion of a disc brake assembly in accordance with this invention.

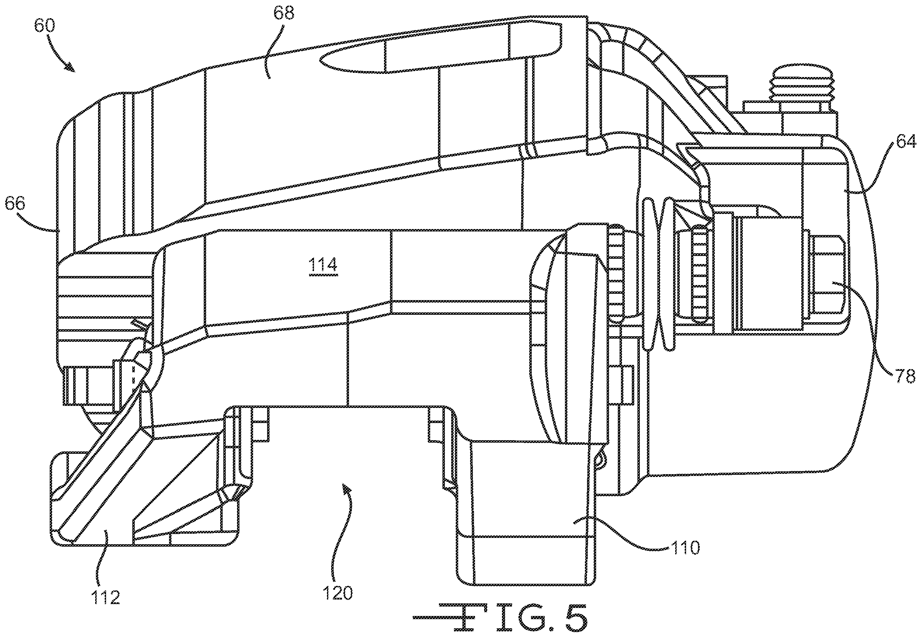

Fig. 5 is a side view of the disc brake assembly of Fig. 4.
Fig. 6 is a perspective view of a portion of a prior art anchor bracket with the portions of the prior art anchor bracket that are machined identified by cross hatching.
Fig. 7 is a perspective view of an anchor bracket of the disc brake assembly of the embodiment of Fig. 4 with the portions of the anchor bracket that are machined identified by cross hatching.
Fig. 8 is a flow chart illustrating a sequence of steps for producing the anchor bracket shown in Figs. 4, 5 and 7 in accordance with this invention.

### DETAILED DESCRIPTION OF THE PREFERRED EMBODIMENTS

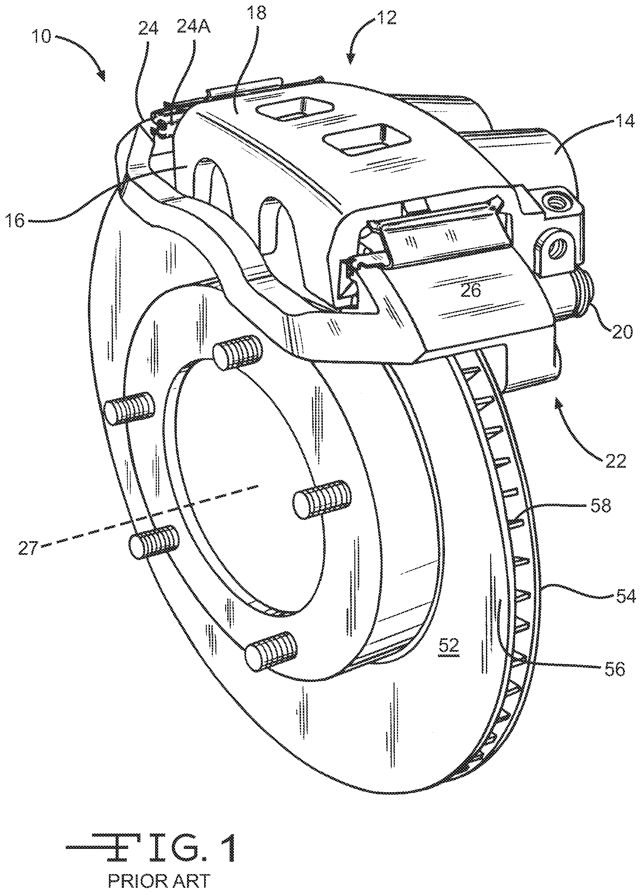

Referring now to the drawings, there is illustrated in Fig. 1 a portion of a prior art vehicle disc brake assembly, indicated generally at 10. The general structure and operation of the disc brake assembly 10 is conventional in the art. Thus, only those portions of the disc brake assembly 10 which are necessary for a full understanding of this invention will be explained and illustrated.

The prior art disc brake assembly 10 is a "sliding type" of disc brake assembly and includes a generally C-shaped caliper, indicated generally at 12. The caliper 12 includes an inboard leg portion 14 and an outboard leg portion 16 which are interconnected by an intermediate bridge portion 18. The caliper 12 is slidably supported on a pair of pins 20 (one of which is visible in Fig. 1) secured to an anchor bracket, indicated generally at 22. The anchor bracket 22 is, in turn, secured to a stationary component of the vehicle. Such a stationary component can be, for example, an axle flange (not shown), when the disc brake assembly 10 is installed for use on the rear of the vehicle, or a steering knuckle (not shown), when the disc brake assembly 10 is installed for use on the front of the vehicle.

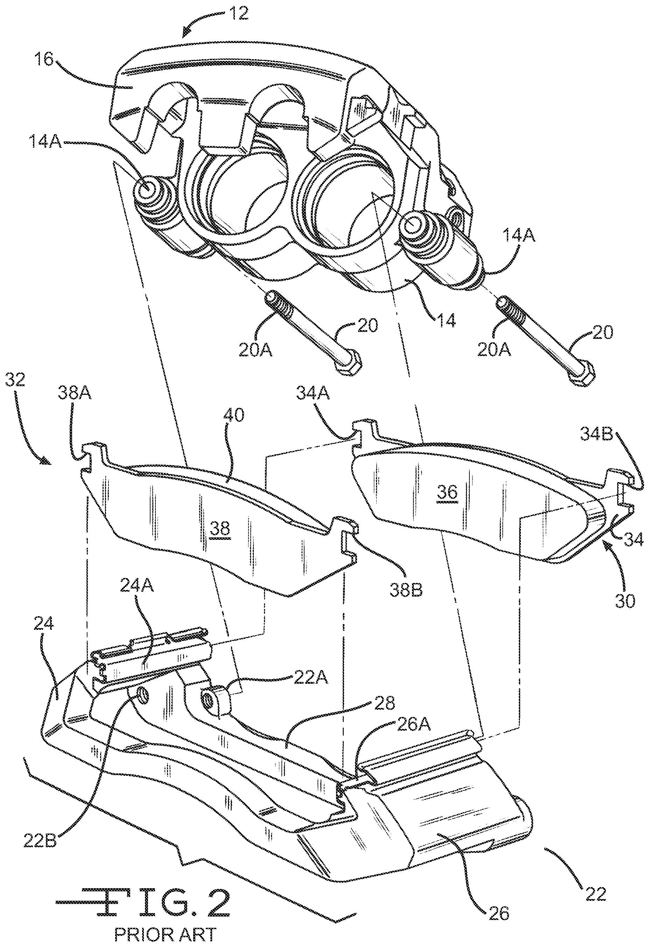

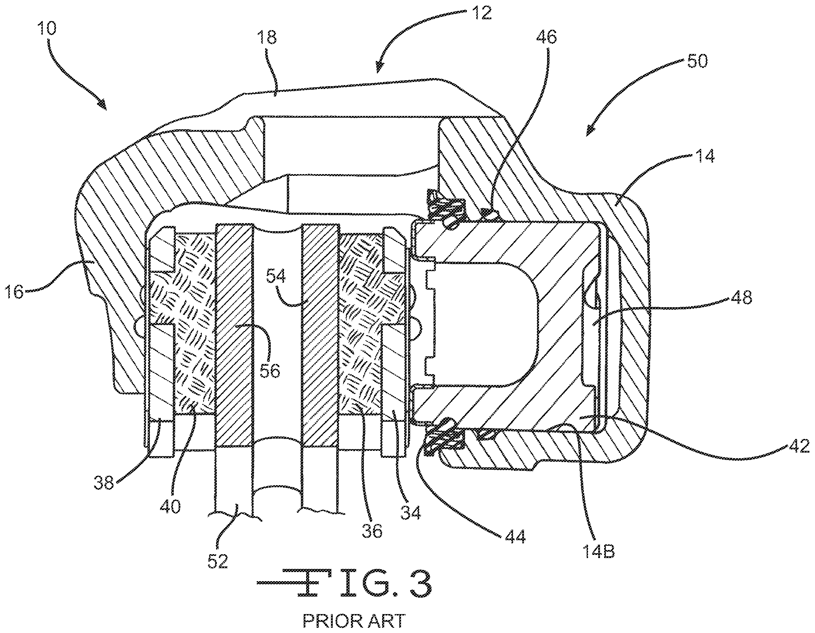

As shown in Fig. 2, the pins 20 extend through non-threaded apertures 14A formed in the inboard leg 14 of the caliper 12. The pins 20 have respective threaded ends 20A which are received in threaded apertures 22A provided in anchor bracket 22. The pins 20 support the caliper 12 for sliding movement relative to the anchor bracket 22 in both the outboard direction (left when viewing Fig. 3) and the inboard direction (right when viewing Fig. 3). Such sliding movement of the caliper 12 occurs when the disc brake assembly 10 is actuated, as will be explained below. In the illustrated prior art embodiment, a pair of bolts (not shown) extend through a pair of non-threaded apertures 22B formed in the anchor bracket 22 to secure the anchor bracket 22 to the stationary vehicle component. Alternatively, other known securing methods can be used to secure the anchor bracket 22 to the stationary vehicle component.

As best shown in Fig. 2, the anchor bracket 22 includes a pair of arms 24 and 26. The arms 24 and 26 extend axially and outwardly relative to an axis 27 (shown in Fig. 1). The arms 24 and 26 are interconnected at their inboard ends by an inner tie bar 28. The arms 24 and 26 have upstanding guide rails 24A and 26A, respectively formed thereon. The guide rails 24A and 26A extend in an inboard to outboard direction along the arms 24 and 26, respectively, and are parallel to one another. The guide rails 24A and 26A slidably support an inboard brake shoe indicated generally at 30, and an outboard brake shoe indicated generally at 32.

The inboard brake shoe 30 includes a backing plate 34 and a friction pad 36. The inboard backing plate 34 includes opposed ends having notches 34A and 34B. The notches 34A and 34B are adapted to support the inboard brake shoe 30 on the guide rails 24A and 26A of the anchor bracket 22. The outboard brake shoe 32 includes a backing plate 38 and a friction pad 40. The outboard backing plate 38 includes opposed ends having notches 38A and 38B. The notches 34A and 34B are adapted to support the outboard brake shoe 32 on the guide rails 24A and 26A of the anchor bracket 22. Alternatively, the inboard brake shoe 30 can be supported on a brake piston of the prior art disc brake assembly 10, while the outboard brake shoe 32 can be supported on the outboard leg portion 16 of the caliper 12.

Referring now to Fig. 3, the prior art disc brake assembly 10 includes an actuation assembly, indicated generally at 50. The actuation assembly 50 is provided for effecting the operation of the disc brake assembly 10. The actuation assembly 50 includes a brake piston 42. The brake piston 42 is disposed in a counterbore or recess 14B formed in the outboard surface of the inboard leg 14 of the caliper 12. The actuation assembly 50, shown in this embodiment as being a hydraulic actuation cylinder, is operable to move the piston 42 within the recess 14B in the outboard direction (left when viewing Fig. 3). It should be appreciated that other desired types of actuators may be used, including electrical, pneumatic, and mechanical types.

The prior art disc brake assembly 10 also includes a dust boot seal 44. The dust boot seal 44 is formed from a flexible material and has a first end which engages an outboard end of the recess 14B. A second end of the dust boot seal 44 engages an annular groove formed in an outer side wall of the piston 42. The dust boot seal 44 includes a plurality of flexible convolutions between the first and second ends thereof. The dust boot seal 44 is provided to prevent water, dirt, and other contaminants from entering into the recess 14B. The prior art disc brake assembly 10 also includes an annular fluid seal 46. The annular fluid seal 46 is disposed in an annular groove formed in a side wall of the recess 14B and engages the outer side wall of the piston 42. The annular fluid seal 46 is provided to define a sealed hydraulic actuator chamber 48 within which the piston 42 is disposed for sliding movement. Also, the annular fluid seal 46 is designed to function as a "roll back" seal to retract the piston 42 within the recess 14B (right when viewing Fig. 3) when the brake pedal is released.

The prior art disc brake assembly 10 further includes a rotor 52. The rotor 52 is connected to a wheel (not shown) of the vehicle and rotates with the wheel. The illustrated rotor 52 includes a pair of opposed braking discs 54 and 56 which are spaced apart from one another. The braking discs 54 and 56 are connected by a plurality of intermediate ribs or fins 58 (shown in Fig. 1) in a known manner. As shown in Fig. 3, the rotor 52 extends between the inboard friction pad 36 and the outboard friction pad 40.

When it is desired to actuate the prior art disc brake assembly 10 to retard or stop the rotation of the brake rotor 52 and the associated vehicle wheel, the driver of the vehicle depresses the brake pedal (not shown). In a manner which is well known in the art, depressing the brake pedal causes pressurized hydraulic fluid to be introduced into the chamber 48. The pressurized hydraulic fluid in the chamber 48 urges the piston 42 in the outboard direction (toward the left when viewing Fig. 3). This causes the piston 42 to engage the backing plate 34 of the inboard brake shoe 30. As a result, the friction pad 36 of the inboard brake shoe 30 is moved into frictional engagement with the inboard braking disc 54 of the rotor 52. The pressurized hydraulic fluid in the chamber 48 also urges the caliper 12 to slide on the pins 20 in the inboard direction (toward the right when viewing Fig. 3). This causes the outboard leg 16 of the caliper 12 to engage the backing plate 38 of the outboard brake shoe 32. As a result, the friction pad 40 of the outboard brake shoe 32 is moved into frictional engagement with the outboard braking disc 56 of the brake rotor 52. Therefore, the opposed braking discs 54 and 56 of the rotor 52 are frictionally engaged by the respective friction pads 36 and 40 to slow or stop relative rotational movement of the rotor 52. The structure and operation of the prior art disc brake assembly 10 thus far described is conventional in the art.

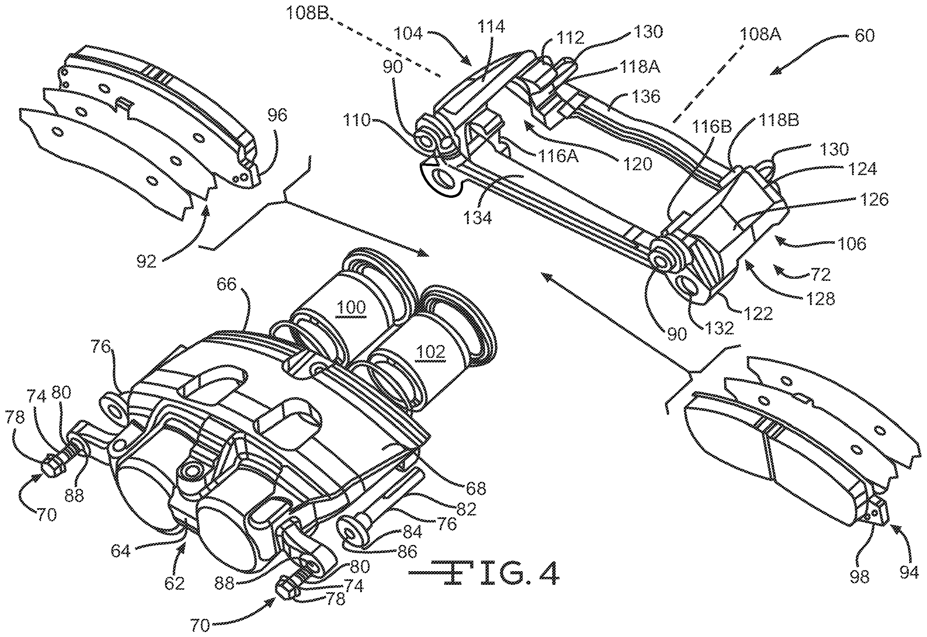

Referring now to Fig. 4, there is illustrated an exploded perspective view of a portion of an embodiment of a disc brake assembly, indicated generally at 60, in accordance with this invention. The disc brake assembly 60 includes some components which are generally similar to components of the prior art disc brake assembly 10 illustrated and described hereinbefore and thus only those components which are necessary for a full understanding of this invention will be discussed hereinafter. Also, while the present invention will be discussed in conjunction with the particular disc brake assembly 60 shown in Fig. 4, it will be appreciated that the invention can be used in conjunction with other kinds and/or types of disc brake assemblies if so desired.

The disc brake assembly 60 includes a generally C-shaped caliper, indicated generally at 62. The caliper 62 includes and inboard leg portion 64 and an outboard leg portion 66. The inboard leg portion 64 and the outboard leg portion 66 are interconnected by an intermediate bridge portion 68. The caliper 62 is slidably supported on a pair of guide pin assemblies, indicated generally at 70. The guide pin assemblies 70 are operatively secured to an anchor bracket, indicated generally at 72. Each of the guide pin assemblies 70 includes a first pin portion 74 and a second pin portion 76. The first pin portion 74 includes a hex head 78 and a threaded end 80. The second pin portion 76 includes an elongated body 82 having an enlarged or flanged end 84 provided with an internally threaded opening 86. The anchor bracket 72, which will be discussed below in detail, is secured to a stationary component of the vehicle (not shown). The stationary component can be an axle flange, a steering knuckle, or any other desired vehicle component.

The inboard leg portion 64 of the caliper 62 includes a pair of non-threaded apertures 88 and the anchor bracket 72 includes a pair of non-threaded guide pin holes or pin apertures 90. The first pin portion 74 of each of the guide pin assemblies 70 extends through the non-threaded apertures 88 of the caliper 62 and is received in the internally threaded opening 86 of each of the second pin portions 76. The elongated body 82 of each of the second pin portions 76 is received in the non-threaded pin aperture 90 of the anchor bracket 72. Once installed, the guide pin assemblies 70 are operative to slidably support the caliper 62 relative to the anchor bracket 72 during operation of the disc brake assembly 60.

The disc brake assembly 60 also includes an inboard brake shoe assembly 92, and an outboard brake shoe assembly 94. The inboard brake shoe assembly 92 includes a pair of inboard guide flanges 96 at the opposed ends thereof (only one of such guide flanges 96 being shown in Fig. 4). The outboard brake shoe assembly 94 includes a pair of outboard guide flanges 98 at the opposed ends thereof (only one of such guide flanges 98 being shown in Fig. 4). The disk brake assembly 60 also includes a pair of disc brake pistons 100 and 102.

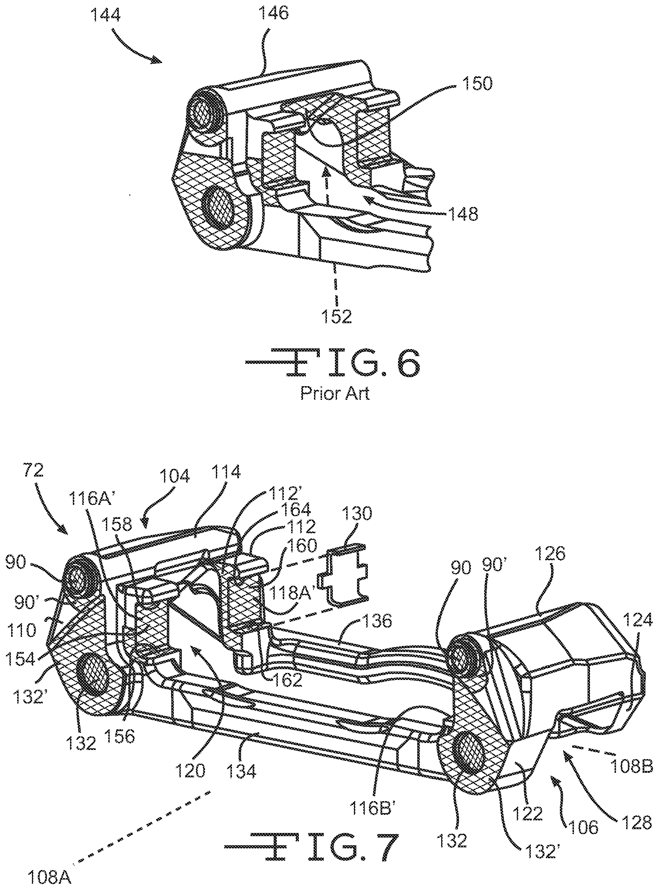

As shown in the embodiment illustrated in Figs. 4 and 7, the anchor bracket 72 includes a first arm, indicated generally at 104, and a second arm, indicated generally at 106. The first arm 104 and the second arm 106 extend axially and outwardly relative to a first axis 108A. The first axis 108A corresponds to the axis of a wheel (not shown) that the disc brake assembly 60 is adapted to brake. The first arm 104 and the second arm 106 also extend generally perpendicular to a second, longitudinal axis 108B. The second axis 108B is perpendicular to the first axis 108A. The first arm 104 includes a first inboard end 110 and a first outboard end 112. The first inboard end 110 and the first outboard end 112 are joined by a first bridge portion 114.

The first inboard end 110 includes a first inboard channel 116A formed therein. The first inboard channel 116A generally extends in the direction of the first axis 108A and has a generally C-shaped cross section. The first outboard end 112 includes a first outboard channel 118A formed therein. The first outboard channel 118A generally extends in the direction of the first axis 108A and has a generally C-shaped cross section. It should be appreciated that in the illustrated embodiment it is shown that the first inboard channel 116A is preferably substantially co-axial with the first outboard channel 118A.

The first inboard end 110, the first outboard end 112, and the bridge portion 114 cooperate to define a first rotor channel, indicated generally at 120, therewithin. The first rotor channel 120 is adapted to accommodate a brake rotor (not shown but which may be generally similar to the brake rotor 52 illustrated and described and illustrated above in connection with the prior art disc brake assembly 10 of Figs. 1-3).

As seen in both Figs. 4 and 7, the second arm 106 includes a second inboard end 122 and a second outboard end 124. The second inboard end 122 and the second outboard end 124 are joined by a second bridge portion 126. The second inboard end 122 includes a second inboard channel 116B (which is only partially shown in Figs. 4 and 7), and the second outboard end 124 includes a second outboard channel 118B (which is only partially shown in Fig. 4). As shown in Figs. 4 and 7, the second inboard end 122, the second outboard end 124, and the bridge portion 126 cooperate to define a second rotor channel, indicated generally at 128, therewithin. The second rotor channel 128 is adapted to accommodate the brake rotor (not shown).

In the illustrated embodiment, it is to be understood that the second inboard channel 116B and the second outboard channel 118B of the second arm 106 are preferably identical in their associated shape and/or configuration to the first inboard channel 116A and the first outboard channel 118A, respectively, of the first arm 104. Thus, the second inboard channel 116B of the second arm 106 generally extends in the direction of the first axis 108A and has a generally C-shaped cross section. Also, the second outboard channel 118B generally extends in the direction of the first axis 108A and has a generally C-shaped cross section. It should be appreciated that in the illustrated embodiment it is shown that the second inboard channel 116B is preferably substantially co-axial with the second outboard channel 118B.

In the illustrated embodiment, the first outboard channel 118A of the first arm 104 is adapted to operatively receive a clip 130 (best seen in Fig. 7) thereon. Additionally, the first inboard channel 116A of the first arm 104, the second inboard channel 116B and the second outboard channel 118B of the second arm 106, are all adapted to operatively receive similar clips (not shown) thereon. Although only one clip 130 is shown, it should be appreciated that a total of four clips 130 are installed on the anchor bracket 72: one in the first inboard channel 116A, one in the first outboard channel 118A, one in the second inboard channel 116B, and one in the second outboard channel 118B. The clip 130 is preferably made of non-corrosive material, such as for example, stainless steel, and has a configuration or structure which enables the clip 130 to be positively or fixedly attached to the anchor bracket 72 within such channels. Once installed, the clips 130 are effective to provide a sliding support surface for the guide flanges 96 and 98 on the inboard brake shoe assembly 92 and the outboard brake shoe assembly 94 during operation of the disc brake assembly 60. Alternatively, the clip 130 may be made of other suitable materials and/or have a protective coating applied thereto to prevent corrosion and/or rust from occurring, if so desired.

In the illustrated embodiment, the first and second inboard ends 110 and 122 of the arms 104 and 106, respectively, each include a non-threaded anchor aperture or mounting opening 132. The mounting openings 132 are adapted to receive suitable fasteners, such as threaded bolts (not shown). The fasteners extend through the mounting openings 132 and are received in threaded openings (not shown) provided in a stationary vehicle component (not shown) to secure the anchor bracket 72 thereto. It should be appreciated that the anchor bracket 72 may be secured to the stationary vehicle component by any other desired methods and/or structures.

As best seen in Fig. 7, in the illustrated embodiment the non-threaded pin apertures 90 are preferably located in each of the bridge portions 114 and 126 of the anchor bracket 72 above the respective rotor channels 120 and 128 and also are preferably slightly offset relative to the respective mounting openings 132. Also, in the illustrated embodiment, the first arm 104 and the second arm 106 are preferably connected at their respective inboard ends 110 and 122 by a first or inner tie bar 134, and are preferably connected at their respective outboard ends 112 and 124 by a second or outer tie bar 136. Alternatively, the anchor bracket 72 could be constructed to include only one of the tie bars 134 and 136, such as for example to include only the inner tie bar 134, if so desired.

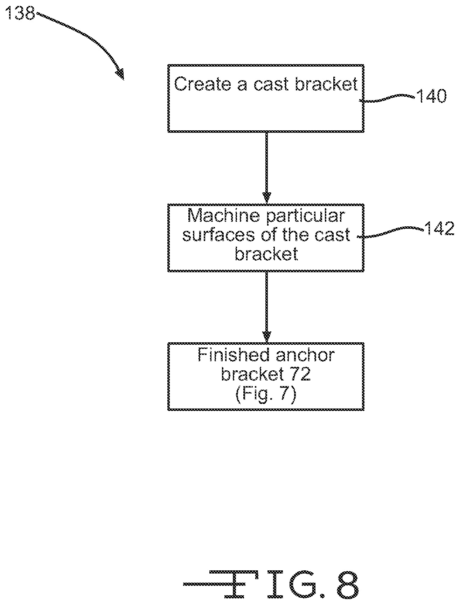

Referring now to Fig. 8, there is illustrated a flow chart showing a preferred embodiment of a sequence of steps for producing the illustrated embodiment of the anchor bracket 72 of this invention, indicated generally at 138. As shown therein, in a step 140 there is provided an "as cast" (i.e., unmachined), anchor bracket (not shown) which generally resembles the anchor bracket 72 of the present invention except that the as cast anchor bracket in step 140 is cast to precise tolerances and/or dimensions in certain areas so that, as will be discussed below, certain surfaces and/or areas of the as cast anchor bracket do not have to be subsequently machined following step 140.

The sequence 138 further includes a step 142, wherein selected surfaces and/or areas of the as cast anchor bracket are subjected to a machining operation. The machining operation in step 142 is, in particular, to provide the required tolerances for the attachment of the clips 130 and to provide clearance for the associated components of the brake shoe assemblies 92 and 94 and the brake rotor.

Referring to Fig. 7, the selected surfaces and/or areas of the as cast anchor bracket that are machined during the machining operation of step 142 are identified by cross hatching on the anchor bracket 72 of the present invention. As shown therein, the selected surfaces and/or portions include an inner face surface 116A' of the first inboard channel 116A and an outer face surface 118A' of the first outboard channel 118A. The inner face surface 116A' includes at least portions on three surfaces of the C-shaped first inboard channel 116A. This includes a front face 154, which extends generally parallel to the first axis 108A and generally perpendicular to the second axis 108B. The inner face surface 116A' also includes two side faces 156 and 158, which extend generally parallel to the first axis 108A and generally parallel to the second axis 108B.

The outer face surface 118A' includes at least portions on three surfaces of the C-shaped first outboard channel 118A. This includes a front face 160, which extends generally parallel to the first axis 108A and generally perpendicular to the second axis 108B. The inner face surface 116A' also includes two side faces 162 and 164, which extend generally parallel to the first axis 108A and generally parallel to the second axis 108B. It should be appreciated that side face 158 and the side face 164 are not visible in Fig. 7, since they are located at upper ends of the first inboard channel 116A and the first outboard channel 118A that are hidden in the perspective view shown in Fig. 7.

The inner face surface 116A' is machined to provide the required tolerances for the proper installation of the clip 130 in the first inboard channel 116A and proper brake shoe clearance. Proper installation of the clip 130 allows the clip 130 to support and allow operation of the brake shoe 92. Similarly, the outer face surface 118A' is machined to provide the required tolerances for the proper installation of the clip 130 in the first outboard channel 118A. Although not visible in Fig. 7, it should be appreciated that an inner face surface of the second inboard channel 116B and an outer face surface of the second outboard channel 118B are also machined during step 142 in the same manner discussed above in connection with the inner face surface 116A' of the first inboard channel 116A and the outer face surface 118A' of the first outboard channel 118A.

The selected surfaces and/or areas of the as cast anchor bracket that are machined during the machining operation of step 142 also include a surface and/or area of a portion of the first outboard end 112 facing the first rotor channel 120, indicated at 112'. Although not visible in Fig. 7, it should be appreciated that the selected surfaces and/or areas that are machined during step 142 preferably also include corresponding portions of the first inboard end 110, the second inboard end 122, and the second outboard end 124. These surfaces and/or areas are machined to provide the required tolerances for brake rotor clearance.

The selected surfaces and/or areas of the as cast anchor bracket that are machined during the machining operation of step 142 also include a surface and/or area of a portion of the first inboard end 110 opposite the first rotor channel 120, indicated at 162. Although not visible in Fig. 7, it should be appreciated that the selected surfaces and/or areas that are machined during step 142 preferably also include corresponding portions of the first outboard end 112, the second inboard end 122, and the second outboard end 124.

The selected surfaces and/or areas of the as cast anchor bracket that are machined during the machining operation of step 142 also include areas 90' around the non-threaded pin apertures 90 and 132' around the mounting openings 132. Although not visible in Fig. 7, it should be appreciated that the selected surfaces and/or areas that are machined during step 142 preferably also include corresponding portions of the first outboard end 112 and the second outboard end 124.

Referring now to prior art Fig. 6, a portion of a prior art anchor bracket 144 is shown. The prior art anchor bracket 144 is manufactured by a sequence of steps of providing a cast anchor bracket and then machining particular surfaces and/or areas of the cast anchor bracket. The surfaces and/or areas that are machined during the machining operation of the prior art anchor bracket 144 are identified by cross hatching in Fig. 6. As shown, the prior art anchor bracket 144 includes machining on surfaces and/or areas thereof that are not machined on the anchor bracket 72 of the present invention. In particular, an area on a first bridge portion 146 on a first arm of the prior art anchor bracket 144 which faces a rotor path 148 is machined, as indicated at 150 thereon. Although not shown in Fig. 6, it should be appreciated that the prior art anchor bracket 144 also includes machining on an area on a second bridge portion thereof on the opposite arm thereof facing the rotor path 148. These areas on the prior art anchor bracket 144 need to be machined in order to provide the necessary clearance in the rotor path 148 for the associated brake rotor (not shown).

One advantage of the anchor bracket 72 of the present invention compared to that of the prior art anchor bracket 144 is that no machining is required on an underside of either the first bridge portion 114 or the second bridge 126 portion thereof. On the prior art anchor bracket 144, in order to machine the area 150, a tool (not shown) is needed and is positioned to extend through the rotor path 148, as indicated by broken arrow 152, in order to machine the area 150. By not having to machine the underside or "rotor side" of the first bridge portion 114 and second bridge portion and 126, the anchor bracket 72 of the present invention is produced without having to utilize a machining tool for machining areas in the first rotor channel 120 and the second rotor channel 128 thereof for brake rotor clearance. This decreases the machining costs associated with producing the anchor bracket 72 of the present invention compared to that for machining the prior art anchor bracket 144.

The principle and mode of operation of this invention have been explained and illustrated in its preferred embodiment. However, it must be understood that this invention may be practiced otherwise than as specifically explained and illustrated without departing from the scope as defined in the appended claims.

## Claims

1. A method for producing an anchor bracket (72) adapted for use in a disc brake assembly (60) of a type wherein relative motion is between a pair of guide pins (70) and a caliper housing (62), the guide pins (70) being slidably disposed in non-threaded guide pin holes (90) provided in an anchor bracket (72) of the disc brake assembly (60) and the anchor bracket (72) having a pair of non-threaded mounting openings (132) formed in arms (104, 106) thereof for securing the anchor bracket (72) to a stationary vehicle component, a respective one of each of the pair of non-threaded mounting openings (132) being offset relative to a respective one of each of the non-threaded guide pin holes (90), the method comprising the steps of:
(a) providing an as cast anchor bracket (72) having two extending arms (104, 106); each of the arms (104, 106) including an inboard end (110, 122) and an outboard end (112, 124) connected by a bridge portion (114, 126); each of the inboard ends (110, 122) defining an inboard channel (116A, 116B); each of the outboard ends (112, 124) defining an outboard channel (118A, 118B); each of the bridge portions (114, 126) extending both continuously between the inboard and outboard ends and above the inboard and outboard channels (116A, 116B, 118A, 118B) so as to continuously span between the inboard and outboard ends thereof to provide material for a guide pin hole (90) formed in each of the bridge portions (114, 126) which extends from the inboard ends (110, 122) to the outboard ends (112, 124) thereof; the bridge portions (114, 126) defining a rotor channel (120, 128) and including an underside portion located at least underneath the material provided in each of the bridge portions (114, 126) for the associated guide pin holes (90), the rotor channel (120, 128) adapted to accommodate a rotor; one of the inboard ends (110, 122) and outboard ends (112, 124) including a mounting opening (90) adapted to receive a retainer (78) to secure the anchor bracket (72) relative to a vehicle component; at least one of the inboard ends (110, 122) and the outboard ends (112, 124) of the arms (104, 106) being interconnected by a tie bar (134, 136);
(b) subsequent to step (a), machining selected surfaces (116A', 118A', 112', 90', 132') of the as cast anchor bracket (72) including:
(1) machining for brake shoe assembly clearances only the faces (154, 156, 158) of each of the inboard channels (116A, 116B) and the faces (160, 162, 164) of each of the outboard channels (118A, 118B) of the as cast anchor bracket (72); and
(2) machining for rotor clearance only a portion (112') of the two arms (104, 106) facing the rotor channel (120, 128) and not the underside portion of each of the bridge portions (114, 126) facing the rotor channel (120, 128).

2. The method for producing an anchor bracket (72) of claim 1, wherein the inboard channel (116A, 116B) defined in each of the arms (104, 106) is substantially co-axial with the outboard channel (118A, 118B) defined therein,
and/or wherein each of the inboard channels (116A, 116B) has a C-shaped cross section, and/or each of the outboard channels (118A, 118B) has a C-shaped cross section,
and/or wherein the inboard ends (110, 122) are interconnected by a first tie bar (134) and/or the outboard ends (112, 124) of the arms (104, 106) are being interconnected by a second tie bar (136),
and/or wherein the mounting opening is included in the inboard ends (110, 122) of the arms (104, 106).

3. The method for producing an anchor bracket (72) of claim 1, wherein the as cast anchor bracket provided in the step (a) is a one-piece cast anchor bracket (72).

4. A method for producing a disc brake assembly (60) of a type wherein relative motion is between a pair of guide pins (70) and a caliper housing (62), the guide pins (70) being slidably disposed in non-threaded guide pin holes (90) provided in an anchor bracket (72) of the disc brake assembly (60) and the anchor bracket (72) having a pair of non-threaded mounting openings (132) formed in arms (104, 106) thereof for securing the anchor bracket (72) to a stationary vehicle component, a respective one of each of the pair of non-threaded mounting openings (132) being offset relative to a respective one of each of the non-threaded guide pin holes (90), the method comprising the steps of:
(a) providing the anchor bracket (72) according to claim 1;
(b) subsequent to step (a), installing a clip (130) in the inboard channel (116A, 116B) of each arm and the outboard channel (118A, 118B) of each arm;
(c) subsequent to step (b), providing an inboard brake shoe assembly (92) and an outboard brake shoe assembly (94) and installing the inboard brake shoe assembly and the outboard brake shoe assembly such that the inboard brake shoe assembly and the outboard brake shoe assembly are supported for sliding movement relative to the clips; and
(d) subsequent to step (c), providing a caliper assembly (62) and securing the caliper assembly to the anchor braket (72) for slidable movement relative thereto.

5. The method for producing a disc brake assembly (60) of claim 4, wherein each of the inboard channels (116A, 116B) has a C-shaped cross section, and each of the outboard channels (118A, 118B) has a C-shaped cross section.

6. The method for producing a disc brake assembly (60) of claim 4, wherein the inboard ends (110, 122) are interconnected by a first tie bar (134) and the outboard ends (112, 124) of the arms (104, 106) are being interconnected by a second tie bar (136).

7. The method for producing a disc brake assembly (60) of claim 6, wherein the mounting opening is included in the inboard ends (110, 122) of the arms (104, 106).

8. The method for producing a disc brake assembly (60) of claim 7, wherein each of the inboard channels (116A, 116B) has a C-shaped cross section, and each of the outboard channels (118A, 118B) has a C-shaped cross section.

9. The method for producing a disc brake assembly (60) of claim 8, wherein the inboard channel (116A, 116B) defined in each of the arms (104, 106) is substantially co-axial with the outboard channel (118A, 118B) defined therein.

10. An anchor bracket (72) adapted for use in a disc brake assembly (60) (60) comprising:
a cast anchor bracket (72) having two extending arms (104, 106), each of the arms (104, 106) including an inboard end (110, 122) and an outboard end (112, 124) connected by a bridge portion (114, 126), each of the inboard ends (110, 122) defining an inboard channel (116A, 116B), each of the outboard ends (112, 124) defining an outboard channel (118A, 118B), each of the bridge portions (114, 126) extending both continuously between the inboard and outboard ends and above the inboard and outboard channels (116A, 116B, 118A, 118B) so as to continuously span between the inboard and outboard ends thereof to provide material for a non-threaded a guide pin hole (90) formed in each of the bridge portions (114, 126) which extends from the inboard ends (110, 122) toward the outboard ends (112, 124) thereof,
the inboard ends (110, 122), outboard ends (112, 124), and bridge portions (114, 126) defining a rotor channel (120, 128) and including an underside portion located at least underneath the material provided in each of the bridge portions (114, 126) for the associated guide pin hole (90), the rotor channel (120, 128) adapted to accommodate a rotor, the inboard ends (110, 122) each including a non-threaded mounting opening (132) formed therein adapted to receive a retainer (78) to secure the anchor bracket (72) relative to a vehicle component, at least one of the inboard ends (110, 122) and the outboard ends (112, 124) of the arms (104, 106) being interconnected by a tie bar (134, 136);
wherein selected surfaces (116A', 118A', 112', 90', 132') of the anchor bracket (72) are machined, including:
for brake shoe assembly clearances, only the faces (154, 156, 158) of the inboard channels (116A, 116B) and the faces of the outboard channels (118A, 118B); and
for rotor clearance, only portions (112') of the two arms (104, 106) facing the rotor channel (120, 128), and not the underside portion of each of the bridge portions (114, 126) facing the rotor channel (120, 128),
wherein a pair of guide pins (70) are slidably disposed in the non-threaded guide pin holes (90) provided in the anchor bracket (72), wherein the disc brake is of a type wherein relative motion is between the pair of guide pins (70) and a caliper housing (62), and wherein a respective one of each of the pair of non-threaded mounting openings (132) are offset relative to a respective one of each of the non-threaded guide pin holes (90).

11. The anchor bracket (72) of claim 10, wherein each of the inboard channels (116A, 116B) has a C-shaped cross section, and each of the outboard channels (118A, 118B) has a C-shaped cross section.

12. The anchor bracket (72) of claim 10, wherein the inboard ends (110, 122) are interconnected by a first tie bar (134) and the outboard ends (112, 124) of the arms (104, 106) are being interconnected by a second tie bar (136).

13. The anchor bracket of claim 10, wherein the cast anchor bracket (72) is a one-piece cast anchor bracket (72).

14. The anchor bracket (72) of claim 12, wherein each of the inboard channels (116A, 116B) has a C-shaped cross section, and each of the outboard channels (118A, 118B)has a C-shaped cross section.

15. The anchor bracket (72) of claim 14, wherein the inboard channel (116A, 116B) defined in each of the arms (104, 106) is substantially co-axial with the outboard channel (118A, 118B) defined therein.

## Patentansprüche

1. Verfahren zur Herstellung einer Verankerungsklammer (72), die zur Verwendung in einer Scheibenbremsenbaugruppe (60) eines Typs eingerichtet ist, bei dem eine relative Bewegung zwischen einem Paar Führungsstiften (70) und einem Bremssattelgehäuse (62) stattfindet, wobei die Führungsstifte (70) gleitbar in gewindelosen Führungsstiftbohrungen (90) in einer Verankerungsklammer (72) der Scheibenbremsenbaugruppe (60) angeordnet sind, und die Verankerungsklammer (72) ein Paar gewindelose Montageöffnungen (132) in ihren Armen (104, 106) zum Befestigen der Verankerungsklammer (72) an einem stationären Fahrzeugbauteil hat, wobei jeweils eine entsprechende Öffnung des Paares gewindeloser Montageöffnungen (132) relativ zu einer entsprechenden Bohrung der gewindelosen Führungsstiftbohrungen (90) versetzt ist, wobei das Verfahren die Schritte aufweist:
(a) Bereitstellen einer gegossenen Verankerungsklammer (72) mit zwei ausgedehnten Armen (104, 106), wobei jeder der Arme (104, 106) ein innenliegendes Ende (110, 122) und ein außenliegendes Ende (112, 124) hat, die durch einen Brückenabschnitt (114, 126) verbunden sind, jedes der innenliegenden Enden (110, 122) einen innenliegenden Durchgang (116A, 116B) definiert, jedes der außenliegenden Enden (112, 124) einen außenliegenden Durchgang (118A, 118B) definiert, jeder der Brückenabschnitte (114, 126), die sich kontinuierlich sowohl zwischen den innen- und den außenliegenden Enden als auch über den innen- und außenliegenden Kanälen (116A, 116B, 118A, 118B) erstrecken, so dass sie die innen- und außenliegenden Enden überspannen und Material für eine Führungsstiftbohrung (90) in jedem der Brückenabschnitte (114, 126) bereitstellen, das sich von dessen innenliegendem Ende (110, 122) bis zum außenliegenden Ende (112, 124) erstreckt, die Brückenabschnitte (114, 126) einen Rotorkanal (120, 128) definieren und einen unterseitigen Abschnitt umfassen, der sich zumindest unterhalb des in dem der Brückenabschnitte (114, 126) für die zugehörigen Führungsstiftbohrungen (90) bereitgestellten Materials befindet, der Rotorkanal (120, 128) zur Aufnahme eines Rotors eingerichtet ist, eines der innenliegenden Enden (110, 122) und der außenliegenden Enden (112, 124) eine Montageöffnung (90) zur Aufnahme eines Befestigungselements (78) zur Sicherung der Verankerungsklammer (72) relativ zu einem Fahrzeugbauteil umfasst, mindestens eines der innenliegenden Enden (110, 122) und der außenliegenden Enden (112, 124) der Arme (104, 106) über eine Verbindungsleiste (134, 136) verbunden sind;
(b) nach Schritt (a) spanende Bearbeitung ausgewählter Oberflächen (116A', 118A', 112', 90' 132') der gegossenen Verankerungsklammer (72), einschließlich:
(1) spanende Bearbeitung zur Herstellung der Freimaße der Bremsschuhbaugruppe nur der Flächen (154, 156, 158) jedes der innenliegenden Durchgänge (116A, 116B) und der Flächen (160, 162, 164) jedes der außenliegenden Durchgänge (118A, 118B) der gegossenen Verankerungsklammer (72); und
(2) spanende Bearbeitung zur Herstellung des Rotorabstands nur eines Abschnitts (112') der zwei Arme (104, 106) gegenüber dem Rotorkanal (120, 128), und nicht des unterseitigen Abschnitts jedes der Brückenabschnitte (114, 126, gegenüber dem Rotorkanal (120, 128).

2. Verfahren zur Herstellung einer Verankerungsklammer (72) nach Anspruch 1, wobei der innenliegende Durchgang (116A, 116B), der in jedem der Arm (104, 104) definiert ist, im Wesentlichen koaxial zu dem darin definierten außenliegenden Durchgang (118A, 118B) ist,
und/oder wobei jeder der innenliegenden Durchgänge (116A, 116B) einen C-förmigen Querschnitt und/oder jeder der außenliegenden Durchgänge (118A, 118B) einen C-förmigen Querschnitt hat,
und/oder wobei die innenliegenden Enden (110, 122) durch eine erste Verbindungsleiste (134) und/oder die außenliegenden Enden (112, 124) der Arme (104, 106) durch eine zweite Verbindungsleiste (136) miteinander verbunden sind,
und/oder wobei die Montageöffnung in den innenliegenden Enden (110, 122) der Arme (104, 106) vorgesehen ist.

3. Verfahren zur Herstellung einer Verankerungsklammer (72) nach Anspruch 1, wobei die in Schritt (a) bereitgestellte gegossene Verankerungsklammer eine einstückige gegossene Verankerungsklammer ist.

4. Verfahren zur Herstellung einen Scheibenbremsenbaugruppe (60) eines Typs, bei dem eine relative Bewegung zwischen einem Paar Führungsstiften (70) und einem Bremssattelgehäuse (62) stattfindet, wobei die Führungsstifte (70) gleitbar in gewindelosen Führungsstiftbohrungen (90) in einer Verankerungsklammer (72) der Scheibenbremsenbaugruppe (60) angeordnet sind, und die Verankerungsklammer (72) ein Paar gewindelose Montageöffnungen (132) in ihren Armen (104, 106) zum Befestigen der Verankerungsklammer (72) an einem stationären Fahrzeugbauteil hat, wobei jeweils eine entsprechende Öffnung des Paares gewindeloser Montageöffnungen (132) relativ zu einer entsprechenden Bohrung der gewindelosen Führungsstiftbohrungen (90) versetzt ist, wobei das Verfahren die Schritte aufweist:
(a) Bereitstellen der Verankerungsklammer (72) nach Anspruch 1;
(b) nach Schritt (a) Einbau einer Klemme (130) in den innenliegenden Durchgang (116A, 116B) jedes Arms und in den außenliegenden Durchgang (118A, 118B) jedes Arms;
(c) nach Schritt (b) Bereitstellen einer innenliegenden Bremsschuhbaugruppe (92) und einer außenliegenden Bremsschuhbaugruppe (94) und Einbau der innenliegenden Bremsschuhbaugruppe sowie der außenliegenden Bremsschuhbaugruppe in der Weise, dass die innenliegende Bremsschuhbaugruppe und die außenliegende Bremsschuhbaugruppe zur gleitenden Bewegung relativ zur Klemme gelagert sind; und
(d) nach Schritt (c) Bereitstellen einer Bremssattelbaugruppe (62) und Befestigen der Bremssattelbaugruppe an der Verankerungsklammer (72) zur gleitbaren Bewegung relativ zu dieser.

5. Verfahren zur Herstellung einen Scheibenbremsenbaugruppe (60) nach Anspruch 4, wobei jeder der innenliegenden Durchgänge (116A, 116B) einen C-förmigen Querschnitt und jeder der außenliegenden Durchgänge (118A, 118B) einen C-förmigen Querschnitt hat.

6. Verfahren zur Herstellung einen Scheibenbremsenbaugruppe (60) nach Anspruch 4, wobei die innenliegenden Enden (110, 112) durch eine erste Verbindungsleiste (134) und die außenliegenden Enden (112, 124) der Arme (104, 106) durch eine zweite Verbindungsleiste (136) miteinander verbunden sind.

7. Verfahren zur Herstellung einen Scheibenbremsenbaugruppe (60) nach Anspruch 6, wobei die Montageöffnung in den innenliegenden Enden (110, 112) der Arme (104, 106) vorgesehen ist.

8. Verfahren zur Herstellung einen Scheibenbremsenbaugruppe (60) nach Anspruch 7, wobei jeder der innenliegenden Durchgänge (116A, 116B) einen C-förmigen Querschnitt und jeder der außenliegenden Durchgänge (118A, 118B) einen C-förmigen Querschnitt hat.

9. Verfahren zur Herstellung einen Scheibenbremsenbaugruppe (60) nach Anspruch 8, wobei der in jedem der Arme (104, 106) definierte innenliegende Durchgang (116A, 116B) im Wesentlichen koaxial zu dem darin definierten außenliegenden Durchgang (118A, 118B) ist.

10. Verankerungsklammer (72), die zur Verwendung in einer Scheibenbremsenbaugruppe (60) eingerichtet ist, aufweisend:
eine gegossene Verankerungsklammer (72) mit zwei ausgedehnten Armen (104, 106), wobei jeder der Arme (104, 106) ein innenliegendes Ende (110, 122) und ein außenliegendes Ende (112, 124) hat, die durch einen Brückenabschnitt (114, 126) verbunden sind, jedes der innenliegenden Enden (110, 122) einen innenliegenden Durchgang (116A, 116B) definiert, jedes der außenliegenden Enden (112, 124) einen außenliegenden Durchgang (118A, 118B) definiert, jeder der Brückenabschnitte (114, 126), die sich kontinuierlich sowohl zwischen den innen- und den außenliegenden Enden als auch über den innen- und den außenliegenden Durchgängen (116A, 116B, 118A, 118B) erstrecken, so dass sie die innen- und außenliegenden Enden überspannen und Material für eine gewindelose Führungsstiftbohrung (90) in jedem der Brückenabschnitte (114, 126) bereitstellen, der sich von dessen innenliegendem Ende (110, 122) bis zum außenliegenden Ende (112, 124) erstreckt,
die innenliegenden Enden (110, 122), die außenliegenden Enden (112, 124) und die Brückenabschnitte (114, 126) einen Rotorkanal (120, 128) definieren und einen unterseitigen Abschnitt umfassen, der sich zumindest unterhalb des in jedem der Brückenabschnitte (114, 126) für die zugehörigen Führungsstiftbohrungen (90) bereitgestellten Materials befindet, der Rotorkanal (120, 128) zur Aufnahme eines Rotors eingerichtet ist, die innenliegenden Enden (110, 122) jeweils eine darin ausgebildete gewindelose Montageöffnung (132) umfassen, die zur Aufnahme eines Befestigungselements (78) zur Sicherung der Verankerungsklammer (72) relativ zu einem Fahrzeugbauteil eingerichtet ist, mindestens eines der innenliegenden Enden (110, 122) und der außenliegenden Enden (112, 124) der Arme (104, 106) über eine Verbindungsleiste (134, 136) verbunden sind;
wobei ausgewählte Oberflächen (116A', 118A', 112', 90' 132') der Verankerungsklammer (72) spanend bearbeitet werden, einschließlich:
für die Freimaße der Bremsschuhbaugruppe nur die Flächen (154, 156, 158) der innenliegenden Durchgänge (116A, 116B) und die Flächen (160, 162, 164) der außenliegenden Durchgänge (118A, 118B); und
für den Rotorabstand nur Abschnitte (112') der zwei Arme (104, 106) gegenüber dem Rotorkanal (120, 128), und nicht des unterseitigen Abschnitts jedes der Brückenabschnitte (114, 126) gegenüber dem Rotorkanal (120, 128), wobei ein Paar Führungsstifte (70) gleitbar in den gewindelosen Führungsstiftbohrungen (90) in der Verankerungsklammer (72) angeordnet ist, wobei die Bremsscheibe von einem Typ ist, bei dem eine relative Bewegung zwischen dem Paar Führungsstiften (70) und einem Bremssattelgehäuse (62) stattfindet, und wobei jeweils eine entsprechende Öffnung des Paares gewindeloser Montageöffnungen (132) relativ zu einer entsprechenden Bohrung der gewindelosen Führungsstiftbohrungen (90) versetzt ist.

11. Verankerungsklammer (72) nach Anspruch 10, wobei jeder der innenliegenden Durchgänge (116A, 116B) einen C-förmigen Querschnitt und jeder der außenliegenden Durchgänge (118A, 118B) einen C-förmigen Querschnitt hat.

12. Verankerungsklammer (72) nach Anspruch 10, wobei die innenliegenden Enden (110, 122) durch eine erste Verbindungsleiste (134) und die außenliegenden Enden (112, 124) der Arme (104, 106) durch eine zweite Verbindungsleiste (136) miteinander verbunden sind.

13. Verankerungsklammer nach Anspruch 10, wobei die gegossene Verankerungsklammer (72) eine einstückige gegossene Verankerungsklammer (72) ist.

14. Verankerungsklammer (72) nach Anspruch 12, wobei jeder der innenliegenden Durchgänge (116A, 116B) einen C-förmigen Querschnitt und jeder der außenliegenden Durchgänge (118A, 118B) einen C-förmigen Querschnitt hat.

15. Verankerungsklammer (72) nach Anspruch 14, wobei der innenliegende Durchgang (116A, 116B), der in jedem der Arme (104, 104) definiert ist, im Wesentlichen koaxial zu dem darin definierten außenliegenden Durchgang (118A, 118B) ist.

## Revendications

1. Procédé de production d'une ferrure d'ancrage (72) conçue pour être utilisée dans un ensemble frein à disque (60) d'un type, le mouvement relatif étant entre une paire de goupilles de guidage (70) et un logement d'étrier (62), les goupilles de guidage (70) étant disposées à coulissement dans des trous de goupille non filetés (90) ménagés dans la ferrure d'ancrage (72) de l'ensemble de frein à disque (60) et la ferrure d'ancrage (72) ayant une paire d'orifices de montage non filetés (132) formés dans ses bras (104, 106) pour fixer la ferrure d'ancrage (72) à une pièce fixe d'un véhicule à moteur, un orifice de montage non fileté respectif de chacune des paires d'orifices de montage non filetés (132) étant décalé par rapport à un trou de goupille non fileté respectif de chacun des trous de goupille de guidage (90), le procédé comprenant les étapes consistant à :
(a) produire une ferrure d'ancrage brute de coulée (72) ayant des bras d'extension (104, 106) ; chacun des bras (104, 106) comprenant une extrémité intérieure (110, 122) et une extrémité extérieure (112, 124) assemblées par une partie pont (114, 126) ; chacune des extrémités intérieures (110, 122) délimitant un canal intérieur (116A, 116B) ; chacune des extrémités extérieures (112, 124) délimitant un canal extérieur (118A, 118B) ; chacune des parties pont (114, 126) s'étendant en continu entre les extrémités extérieures et intérieures et au-dessus des canaux intérieurs et extérieurs (116A, 116B, 118a, 118B) de manière à s'étendre en continu entre leurs extrémités intérieures et extérieures pour fournir de la matière pour un trou de goupille de guidage (114, 126) délimitant un canal de rotor (120, 128) et comprenant une partie sous-face située au moins sous le matériau fourni dans chacune des parties pont (114, 126) pour les trous de goupille de guidage associés (90), le canal de rotor (120, 128) conçu pour loger un rotor ; l'une des extrémités intérieures (110, 112) et l'une des extrémités extérieures (112, 124) comprenant une ouverture de montage (90) conçue pour recevoir un dispositif de retenue (78) pour fixer la ferrure d'ancrage (72) par rapport à une pièce de véhicule à moteur ; au moins l'une des extrémités intérieures (110, 122) et l'une des extrémités extérieures (112, 124) des bras (104, 106) étant interconnectées par une barre de connexion (134, 136) ;
(b) après l'étape (a), usiner les surfaces sélectionnées (116A', 118A', 112', 90', 132') de la ferrure d'ancrage brute de coulée (72) consistant à :
(1) usiner, pour obtenir des jeux d'assemblage de sabot de frein, les faces (154, 156, 158) de chacun des canaux intérieurs (116A, 116B) et les faces (160, 162, 164) de chacun des canaux extérieurs (118A, 118B) de la ferrure d'ancrage brute de coulée (72) ; et
(2) usiner, pour obtenir un jeu de rotor, uniquement une partie (112') des deux bras (104, 106) en regard du canal de rotor (120, 128) et non la partie inférieure de chacune des parties pont (114, 126) en regard du canal de rotor (120, 128).

2. Procédé de production d'une ferrure d'ancrage (72) selon la revendication 1, le canal intérieur (116A, 116B) délimité dans chacun des bras (104, 106) étant sensiblement coaxial au canal extérieur (118A, 11B) délimité à l'intérieur de ce dernier,
et/ou chacun des canaux intérieurs (116A, 116B) ayant une section transversale en forme de C, et/ou chacun des canaux extérieurs (118A, 118B) ayant une section transversale en forme de C,
et/ou les extrémités intérieures (110, 122) étant interconnectées par une première barre de connexion (134) et/ou les extrémités extérieures (112, 124) des bras (104, 106) étant interconnectées par une seconde barre de connexion (136),
et/ou l'ouverture de montage étant comprise dans les extrémités intérieures (110, 122) des bras (104, 106).

3. Procédé de production d'une ferrure d'ancrage (72) selon la revendication 1, la ferrure d'ancrage brute de coulée produite à l'étape (a) étant une ferrure d'ancrage brute de coulée monobloc (72).

4. Procédé de production d'un ensemble frein à disque (60) d'un type, le mouvement relatif étant entre une paire de goupilles de guidage (70) et un logement d'étrier (62), les goupilles de guidage (70) étant disposées à coulissement dans des trous de goupille de guidage non filetés (90) ménagés dans une ferrure d'ancrage (72) de l'ensemble frein à disque (60), et la ferrure d'ancrage (72) ayant une paire d'orifices de montage non filetés (132) formés dans ses bras (104, 106) pour fixer la ferrure d'ancrage (72) à une pièce fixe de véhicule à moteur, l'un des orifice de montage non filetés respectif dans chacune paire de trous de montage non filetés (132) étant décalé par rapport à l'un des trous de chacun des trous de goupille non filetés (90), le procédé comprenant les étapes consistant à :
(a) produire la ferrure d'ancrage (72) selon la revendication 1 ;
(b) après l'étape (a), installer des agrafes (130) dans le canal intérieur (116A, 11B) de chaque bras et dans le canal intérieur (118A, 118B) de chaque bras ;
(c) après l'étape (b), produire un ensemble sabot de frein intérieur (92) et un ensemble sabot de frein extérieur (94) et installer l'ensemble sabot de frein intérieur et l'ensemble sabot de frein extérieur de sorte que l'ensemble sabot de frein intérieur et l'ensemble sabot de frein extérieur soient supportés pour qu'ils puissent coulisser par rapport aux agrafes ; et
(d) après l'étape (c), produire un ensemble étrier (62) et fixer l'ensemble étrier à la ferrure d'ancrage (72) pour qu'il puisse y coulisser.

5. Procédé de production d'un ensemble de frein à disque (60) selon la revendication 4, chacun des canaux intérieurs (116A, 116B) ayant une section transversale en forme de C, et chacun des canaux extérieurs (118A 118B) ayant une section transversale en forme de C.

6. Procédé de production d'un ensemble frein à disque (60) selon la revendication 4, les extrémités intérieures (110, 112) étant interconnectées par une première barre de connexion (134) et les extrémités extérieures (112, 124) des bras (104, 106) étant interconnectées par une seconde barre de connexion (136).

7. Procédé de production d'un ensemble frein à disque (60) selon la revendication 6, l'orifice de montage étant inclus dans les extrémités intérieures (110, 112) des bras (104, 106).

8. Procédé de production d'un ensemble frein à disque (60) selon la revendication 7, chacun des canaux intérieurs (116A, 116B) ayant une section transversale en forme de C, et chacun des canaux extérieurs (118A, 118B) ayant une section transversale en forme de C.

9. Procédé de production d'un ensemble frein à disque (60) selon la revendication 8, le canal intérieur (116A, 118B) délimité dans chacun des bras (104, 106) étant sensiblement coaxial au canal extérieur (118A, 118B) délimité à l'intérieur de ce dernier.

10. Ferrure d'ancre (72) conçue pour être utilisée dans un ensemble frein à disque (60) comprenant :
une ferrure d'ancrage brute de coulée (72) ayant deux bras d'extension (104, 106), chacun des bras (104, 106) comprenant une extrémité intérieure (110, 112) et une extrémité extérieure (112, 124) assemblées par une partie point (114, 126) chacune des extrémités intérieures (110, 112) délimitant un canal intérieur (116A, 116B), chacune des extrémités extérieures (112, 124) délimitant un canal extérieur (118A, 118B), chacune des parties pont (114, 126) s'étendant toutes les deux en continu entre les extrémités intérieures et extérieures et au-dessus des canaux intérieurs et extérieurs (116A, 116B, 118A, 118B) afin qu'elles s'étendent entre leurs extrémités intérieures et extérieures pour fournir de la matière pour un trou de goupille de guidage (90) formé dans chacune des parties pont (114, 126) qui s'étendent à partir des extrémités intérieures (110, 122) en direction leurs extrémités extérieures (112, 124),
les extrémités intérieures (110, 112), les extrémités extérieures (112, 124) et les parties pont (114, 126) délimitant un canal de rotor (120, 128) et comprenant une partie inférieure située au moins sous le matériau fourni dans chacune des parties pont (114, 126) pour le trou de goupille de guidage associé (90), le canal de rotor (120, 128) conçu pour loger un rotor, les extrémités intérieures (110, 122) chacune comprenant un orifice de montage non fileté (132) conçu en leur sein pour recevoir un dispositif de retenue (78) pour fixer la ferrure d'ancrage (72) par rapport à la pièce de véhicule à moteur, au moins l'une des extrémités intérieures (110, 112) et des extrémités extérieures (112, 124) des bras (104, 106) étant interconnectées par une barre de connexion (134, 136) ;
les surfaces sélectionnées (116A', 118A', 112', 90', 132') de la ferrure d'ancrage (72) sont usinées, autrement dit :
pour les jeux d'ensemble sabot de frein, uniquement les faces (154, 156, 158) des canaux intérieurs (116A, 116B) et les faces des canaux extérieurs (118A, 118B) ; et
pour le jeu de rotor, uniquement des parties (112') des deux bras (104, 106) en regard du canal de rotor (120, 128) et non la partie inférieure de chacune des parties pont (114, 126) en regard du canal de rotor (120, 128),
une paire de goupilles de guidage (70) étant disposée à coulissement dans les trous de goupille de guide non filetés (90) ménagés dans la ferrure d'ancrage (72), le frein à disque étant d'un type, le mouvement relatif étant entre la paire de goupilles de guidage (70) et un logement d'étrier (62) et un orifice de montage non fileté de chacune de la paire d'orifices de montage non filetés (132) étant décalé par rapport à un trou de goupille non fileté de chacun des trous de goupille non filetés (90).

11. Ferrure d'ancrage (72) selon la revendication 10, chacun des canaux intérieurs (116A, 116B) ayant une section transversale en forme de C, et chacun des canaux extérieurs (118A, 118B) ayant une section transversale en forme de C.

12. Ferrure d'ancrage (72) selon la revendication 10, les extrémités intérieures (110, 112) étant interconnectées par une première barre de connexion (134) et les extrémités extérieures (112, 134) des bras (104, 106) étant interconnectées par une seconde barre de connexion (136).

13. Ferrure d'ancrage selon la revendication 10, la ferrure d'ancrage brute de coulée (72) étant une ferrure d'ancrage brute de coulée monobloc (72).

14. Ferrure d'ancrage (72) selon la revendication 12, chacun des canaux intérieurs (116A, 116B) ayant une section transversale en forme de C, et chacun des canaux extérieurs (118A, 118B) ayant une section transversale en forme de C.

15. Ferrure d'ancrage (72) selon la revendication 14, le canal intérieur (116A, 116B) délimité dans chacun des bras (104, 106) étant sensiblement coaxial avec le canal extérieur (118A, 118B) délimité dans ces derniers.
